# EUROPEAN PATENT APPLICATION

(11) **EP 4 722 880 A1**
(43) Date of publication of application: **08.04.2026**
(21) Application number: 24894404.3
(22) Date of filing: 25.10.2024
(51) Int. Cl.: G06F 3/0484, G06F 3/0482, G06F 3/041, G06F 3/04817

(54) **ELECTRONIC APPARATUS AND CONTROL METHOD THEREFOR**

(30) Priority: 21.11.2023 KR 20230162381
(71) Applicant: Samsung Electronics Co., Ltd., Suwon-si, Gyeonggi-do 16677 (KR)
(72) Inventor: LEE, Minkyung, Suwon-si, Gyeonggi-do 16677 (KR); KIM, Junggeun, Suwon-si, Gyeonggi-do 16677 (KR); MOON, Jibum, Suwon-si, Gyeonggi-do 16677 (KR); SHIM, Ahyeon, Suwon-si, Gyeonggi-do 16677 (KR); HONG, Junpyo, Suwon-si, Gyeonggi-do 16677 (KR); MOON, Joosun, Suwon-si, Gyeonggi-do 16677 (KR); OH, Yoonjung, Suwon-si, Gyeonggi-do 16677 (KR)
(74) Representative: Appleyard Lees IP LLP
(86) International application number: PCT/KR2024/016477
(87) International publication number: WO 2025/110510

(57) **Abstract**

An electronic apparatus is disclosed. The electronic apparatus includes a display including a touch panel, memory storing one or more instructions, a communication interface, and at least one processor that is operatively connected with the display, the memory, and the communication interface, wherein the at least one processor may, by executing the one or more instructions, while a user interface (UI) screen including a plurality of graphic user interface (GUI) items and a focus GUI located on any one GUI item among the plurality of GUI items is being provided through the display, control a display state of the UI screen according to a control signal received from a remote control apparatus through the communication interface, and based on identifying a touch input for one area of the display, provide a touch mode by realigning the locations of the plurality of GUI items while a location of a GUI item related to the one area wherein the touch input was identified is fixed.

## Description

### [TECHNICAL FIELD]

The disclosure relates to an electronic apparatus and a method for providing a UI thereof, and more particularly, to an electronic apparatus that controls a UI screen navigating a plurality of GUI items, and a method for providing a UI thereof.

### [BACKGROUND ART]

Spurred by the development of electronic technologies, various types of electronic apparatuses are being developed. In particular, to meet users' needs who want newer and more various functions, display apparatuses such as TVs are providing various contents.

As types of contents provided by a TV are becoming more diverse and the number of contents is increasing, importance of a navigation function for searching contents desired by a user is increasing.

### [DISCLOSURE]

### [TECHNICAL SOLUTION]

An electronic apparatus according to an embodiment of the disclosure includes
a display including a touch panel, memory storing one or more instructions, a communication interface, and at least one processor that is operatively connected with the display, the memory, and the communication interface, wherein the at least one processor may, by executing the one or more instructions, while a user interface (UI) screen including a plurality of graphic user interface (GUI) items and a focus GUI located on any one GUI item among the plurality of GUI items is being provided through the display, control a display state of the UI screen according to a control signal received from a remote control apparatus through the communication interface, and based on identifying a touch input for one area of the display, provide a touch mode by realigning the locations of the plurality of GUI items while a location of a GUI item related to the one area wherein the touch input was identified is fixed.

According to an embodiment, the at least one processor may, by executing the one or more instructions, control the display state of the UI screen such that the focus GUI disappears from the screen in the touch mode, and provide the touch mode by realigning the locations of the plurality of GUI items based on the location of the focus GUI before the touch input was identified and the location of the one area wherein the touch input was identified.

According to an embodiment, the at least one processor may, by executing the one or more instructions, based on the location of the touch input being a first GUI item on which the focus GUI is located or an upper area of the first GUI item, provide the touch mode by realigning the locations of the plurality of GUI items by moving a second GUI item in a lower area of the first GUI item to the upper area, and based on the location of the touch input being the lower area of the first GUI item on which the focus GUI is located, provide the touch mode by realigning the locations of the plurality of GUI items by moving a third GUI item in the upper area of the first GUI item to the lower area.

According to an embodiment, the at least one processor may, by executing the one or more instructions, while the focus GUI is located on a menu item included in a side bar area and the side bar area has been extended, if a touch input for an area other than the side bar area is identified, control the display state of the UI screen such that the side bar area is reduced and the focus GUI disappears from the screen, and while the focus GUI is located on the menu item included in the side bar area and the side bar area has been extended, if a touch input for the menu item included in the side bar area is identified, perform an operation corresponding to the menu item wherein the touch input was identified.

According to an embodiment, the at least one processor may, by executing the one or more instructions, provide a floating menu including a plurality of menu items corresponding to a plurality of functions in the touch mode, and the plurality of functions may include functions that can be provided through the remote control apparatus.

According to an embodiment, the at least one processor may, by executing the one or more instructions, based on any one of the plurality of menu items included in the floating menu being selected according to a user instruction in the touch mode, provide a sub-floating menu corresponding to the selected menu item, and based on a touch non-supporting screen being displayed according to a user instruction in the touch mode, provide a four-direction manipulation UI for controlling a focus GUI provided on the touch non-supporting screen.

According to an embodiment, the at least one processor may, by executing the one or more instructions, based on receiving a control signal from the remote control apparatus in the touch mode, identify whether a side bar area is in an extended state, and based on the side bar area being in an extended state, provide the focus GUI to a menu item corresponding to a category of an area other than the side bar area among menu items included in the side bar area, and based on the side bar area being in a reduced state, provide the focus GUI to a GUI item included in the area other than the side bar area.

According to an embodiment, the at least one processor may, by executing the one or more instructions, based on receiving a control signal from the remote control apparatus in the touch mode, identify whether the GUI item on which the focus GUI is located is provided on the screen according to a predetermined standard, and based on the GUI item on which the focus GUI is located being provided on the screen, provide the focus GUI to the GUI item, and based on the GUI item not being provided on the screen, or only a part of the GUI item being provided on the screen, provide the focus GUI to a GUI item in a predetermined location.

According to an embodiment, the at least one processor may, by executing the one or more instructions, as a GUI item is selected in the touch mode, if a control signal is received from the remote control apparatus after entering a sub depth screen corresponding to the selected GUI item, realign the plurality of GUIs such that the focus GUI is located on the GUI item according to whether it is a fixed focus GUI or a movable focus GUI, and provide the plurality of GUIs.

According to an embodiment, the at least one processor may, by executing the one or more instructions, based on a left-right scroll input being identified and a touch input corresponding to the left-right scroll input being released in the touch mode, realign the locations of the plurality of GUI items that moved according to the left-right scroll input on the time point of release, and provide the plurality of GUI items.

According to an embodiment, the at least one processor may, by executing the one or more instructions, based on receiving a control signal from the remote control apparatus after entering the touch mode, realign the up-down arrangement locations of the plurality of GUI items according to a predetermined standard, and provide the focus GUI to a predetermined GUI item among the plurality of realigned GUI items.

A control method of an electronic apparatus including a display wherein a touch input is possible according to an embodiment of the disclosure includes the steps of, while a user interface (UI) screen including a plurality of graphic user interface (GUI) items and a focus GUI located on any one GUI item among the plurality of GUI items is being provided through the display, controlling a display state of the UI screen according to a control signal received from a remote control apparatus, and based on identifying a touch input for one area of the display, providing a touch mode by realigning the locations of the plurality of GUI items while a location of a GUI item related to the one area wherein the touch input was identified is fixed.

In a non-transitory computer readable medium storing computer instructions that, when executed by at least one processor of an electronic apparatus including a display wherein a touch input is possible, make the electronic apparatus perform operations according to an embodiment of the disclosure, the operations include the steps of, while a user interface (UI) screen including a plurality of graphic user interface (GUI) items and a focus GUI located on any one GUI item among the plurality of GUI items is being provided through the display, controlling a display state of the UI screen according to a control signal received from a remote control apparatus, and based on identifying a touch input for one area of the display, providing a touch mode by realigning the locations of the plurality of GUI items while a location of a GUI item related to the one area wherein the touch input was identified is fixed.

### [BRIEF DESCRIPTION OF DRAWINGS]

FIG. 1 is a diagram for illustrating an implementation example of an electronic apparatus according to an embodiment of the disclosure;
FIG. 2A is a block diagram illustrating a configuration of an electronic apparatus according to an embodiment of the disclosure;
FIG. 2B is a block diagram illustrating in more detailed configuration of an electronic apparatus according to an embodiment of the disclosure;
FIG. 3 is a flow chart illustrating a control method of an electronic apparatus according to an embodiment of the disclosure;
FIG. 4A and FIG. 4B are diagrams for illustrating basic operations in a focus mode and a touch mode according to an embodiment of the disclosure;
FIG. 5A and FIG. 5B are diagrams for illustrating operations according to conversion from a focus mode to a touch mode according to an embodiment of the disclosure;
FIG. 6 is a flow chart for illustrating a control method of an electronic apparatus according to an embodiment of the disclosure;
FIG. 7A and FIG. 7B are diagrams for illustrating operations according to conversion from a focus mode to a touch mode according to an embodiment of the disclosure;
FIG. 8 is a flow chart for illustrating a control method of an electronic apparatus according to an embodiment of the disclosure;
FIG. 9A and FIG. 9B are diagrams for illustrating operations according to conversion from a focus mode to a touch mode according to an embodiment of the disclosure;
FIG. 10 is a diagram for illustrating a control method of an electronic apparatus according to an embodiment of the disclosure;
FIG. 11 is a diagram for illustrating operations according to conversion from a touch mode to a focus mode according to an embodiment of the disclosure;
FIG. 12A, FIG. 12B, FIG. 12C and FIG. 13 are diagrams for illustrating a configuration and operations of a floating menu according to an embodiment of the disclosure;
FIGS. 14A, 14B, 14C and 14D are diagrams for illustrating an interaction method of a floating menu according to an embodiment of the disclosure;
FIG. 15 is a flow chart for illustrating a control method of an electronic apparatus according to an embodiment of the disclosure;
FIG. 16A and FIG. 16B are diagrams for illustrating operations according to conversion from a touch mode to a focus mode according to an embodiment of the disclosure;
FIG. 17 is a diagram for illustrating a control method of an electronic apparatus according to an embodiment of the disclosure;
FIG. 18A and FIG. 18B are diagrams for illustrating operations according to conversion from a touch mode to a focus mode according to an embodiment of the disclosure;
FIG. 19A and FIG. 19B are diagrams for illustrating operations according to conversion from a touch mode to a focus mode according to an embodiment of the disclosure;
FIG. 20A and FIG. 20B are diagrams for illustrating operations according to conversion from a touch mode to a focus mode according to an embodiment of the disclosure; and
FIG. 21A and FIG. 21B are diagrams for illustrating operations according to conversion from a touch mode to a focus mode according to an embodiment of the disclosure.

### [DETAILED DESCRIPTION]

First, terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g., elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including only A, (2) including only B, or (3) including both of A and B.

Further, the expressions "first," "second," and the like used in this specification may be used to describe various elements regardless of any order and/or degree of importance. Also, such expressions are used only to distinguish one element from another element, and are not intended to limit the elements.

The description in the disclosure that one element (e.g., a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

Also, the expression "configured to" used in the disclosure may be interchangeably used with other expressions such as "suitable for," "having the capacity to," "designed to," "adapted to," "made to," and "capable of," depending on cases. The term "configured to" may not necessarily mean that an apparatus is "specifically designed to" in terms of hardware.

Instead, under some circumstances, the expression "an apparatus configured to" may mean that the apparatus "is capable of" performing an operation together with another apparatus or component. For example, the phrase "a processor configured to perform A, B, and C" may mean a dedicated processor (e.g., an embedded processor) for performing the corresponding operations, or a generic-purpose processor (e.g., a CPU or an application processor) that can perform the corresponding operations by executing one or more software programs stored in a memory device.

Also, singular expressions include plural expressions, unless defined obviously differently in the context. Further, in the disclosure, terms such as "include" or "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the embodiments of the disclosure, "a module" or "a part" performs at least one function or operation, and may be implemented as hardware or software, or as a combination of hardware and software. Also, a plurality of "modules" or "parts" may be integrated into at least one module and implemented as at least one processor, except "a module" or "a part" that needs to be implemented as specific hardware.

Various elements and areas in drawings were illustrated schematically. Accordingly, the technical idea of the disclosure is not limited by the relative sizes or intervals illustrated in the accompanying drawings.

Hereinafter, an embodiment of the disclosure will be described in more detail with reference to the accompanying drawings.

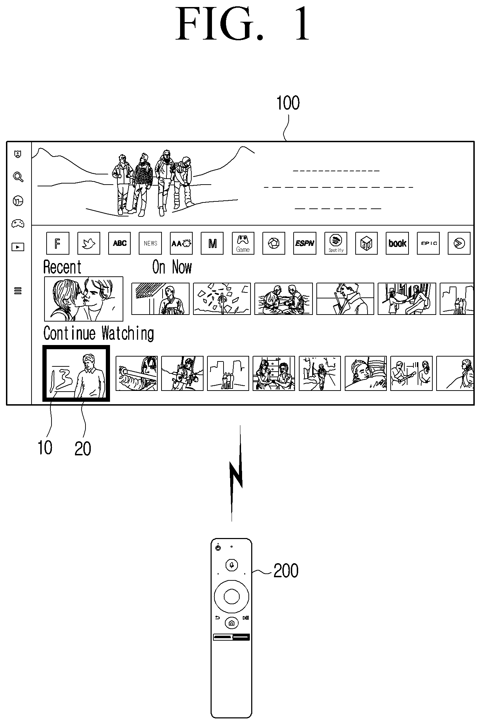

FIG. 1 is a diagram for illustrating an implementation example of an electronic apparatus according to an embodiment of the disclosure.

According to FIG. 1, the electronic apparatus 100 may be implemented as a display apparatus that can be remotely controlled by a remote control apparatus 200. According to an embodiment, the electronic apparatus 100 may be any apparatus equipped with a display function such as a TV, a desktop PC, a laptop PC, a large format display (LFD), digital signage, a digital information display (DID), a video wall, a projector, a refrigerator, an air conditioner, an air purifier, a medical device, etc.. Here, the remote control apparatus 200 may be implemented as a remote control, but is not necessarily limited thereto, and it may also be implemented as an apparatus that can be remotely controlled by using an application such as a smartphone, etc.

According to an embodiment, the processor 140 may control the display apparatus 110 to display various types of screens that can be controlled by the remote control apparatus 200 such as a UI screen including a plurality of graphic user interface (GUI) items, a content reproduction screen, etc.

According to an embodiment, the electronic apparatus 100 may provide a UI screen including a plurality of GUI items having various sizes and/or various ratios and a focus GUI 20 located on any one GUI item 10 among them. According to an embodiment, the electronic apparatus 100 may control navigation operations among the plurality of GUI items based on various forms of focus control methods such as a predetermined navigation input, e.g., a press manipulation for a specific button provided on the remote control apparatus 200 (e.g., a long press input), a touch scroll manipulation, a scroll button manipulation, continuous key inputs at a wheel input device, etc. depending on implementation examples of the electronic apparatus 100. Here, the focus control methods may include various types such as a movable focus method, a fixed focus method, etc. Hereinafter, a mode of controlling a UI screen by using a focus GUI according to a remote control signal will be referred to as a focus mode.

According to an embodiment, the display provided on the electronic apparatus 100 may be implemented as a touch screen combined with a touch sensor. Accordingly, the electronic apparatus 100 may convert from a focus mode to a touch mode according to a user's touch input.

In this case, in conversion between a focus mode and a touch mode, it is necessary to provide a UI/UX experience of seamlessly converting between the modes based on characteristics of each mode while maintaining a context that a user was using.

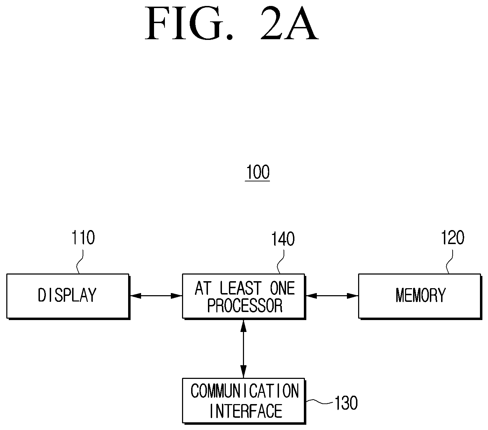

FIG. 2A is a block diagram illustrating a configuration of an electronic apparatus according to an embodiment of the disclosure.

According to FIG. 2A, the electronic apparatus 100 may include a display 110, a memory 120, at least one processor 140.

The electronic apparatus 100 may be implemented as an input panel such as a touch panel and a touch screen, or implemented as an electronic apparatus such as a laptop computer including a touch panel or a touch screen , an electronic board, digital signage, a kiosk, a monitor, etc.

The display 110 may be implemented as a display including self-luminous elements, or a display including non-self-luminous elements and a backlight. For example, the display 110 may be implemented as various forms of displays such as a liquid crystal display (LCD), an organic light emitting diodes (OLED) display, light emitting diodes (LEDs), micro LEDs, mini LEDs, a plasma display panel (PDP), a quantum dot (QD) display, quantum dot light emitting diodes (QLEDs), etc. Inside the display 110, driving circuits that may be implemented in forms such as an a-si TFT, a low temperature poly silicon (LTPS) TFT, an organic TFT (OTFT), etc., and a backlight unit, etc. may also be included together. According to an embodiment, a touch sensor that has forms such as a touch film, a touch sheet, a touch pad, etc., and detects a touching operation is arranged on the front surface of the display 110, and the display 110 may be implemented to be able to detect various types of touch inputs. For example, the display 110 may detect various types of touch inputs such as a touch input by a user's hand, a touch input by an input device such as a stylus pen, a touch input by a specific electrostatic material, etc. Here, the input device may be implemented as an input device in a pen type that can be referred to as various terms such as an electronic pen, a stylus pen, an S-pen, etc. According to an embodiment, the display 110 may be implemented as a flat display, a curved display, a flexible display that can be folded and/or rolled, etc.

The memory 120 may store data necessary for various embodiments. The memory 120 may be implemented in a form of one or more memory elements embedded in the electronic apparatus 100, or implemented in a form of memory that can be attached to or detached from the electronic apparatus 100 according to the usage of stored data. For example, in the case of data for operating the electronic apparatus 100, the data may be stored in memory embedded in the electronic apparatus 100, and in the case of data for an extended function of the electronic apparatus 100, the data may be stored in memory that can be attached to or detached from the electronic apparatus 100. In the case of memory embedded in the electronic apparatus 100, the memory may be implemented as at least one of volatile memory (e.g., dynamic RAM (DRAM), static RAM (SRAM), or synchronous dynamic RAM (SDRAM), etc.) or non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash, etc.), a hard drive, or a solid state drive (SSD)). Also, in the case of memory that can be attached to or detached from the electronic apparatus 100, the memory may be implemented in forms such as a memory card (e.g., compact flash (CF), secure digital (SD), micro secure digital (Micro-SD), mini secure digital (Mini-SD), extreme digital (xD), a multimedia card (MMC), etc.), and external memory that can be connected to a USB port (e.g., a USB memory), etc.

The at least one processor 140 controls the overall operations of the electronic apparatus 100. Specifically, the at least one processor 140 may be connected with each component of the electronic apparatus 100, and control the overall operations of the electronic apparatus 100. For example, the at least one processor 140 may be electrically connected with the display 110 and the memory 120, and control the overall operations of the electronic apparatus 100. The at least one processor 140 may consist of one or a plurality of processors.

The at least one processor 140 may perform operations of the electronic apparatus 100 according to the various embodiments by executing at least one instruction stored in the memory 120. For example, the at least one processor 140 may be electrically connected with the display 110 and the memory 120, and control the overall operations of the electronic apparatus 100.

The at least one processor 140 may perform the operations of the electronic apparatus 100 according to the various embodiments by executing the at least one instruction stored in the memory 120.

The at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or a random combination of other components of the electronic apparatus 100, and perform operations regarding communication or data processing. The at least one processor 140 may execute one or more programs or instructions stored in the memory 120. For example, the at least one processor 140 may perform the method according to an embodiment of the disclosure by executing the at least one instruction stored in the memory 120

In a case where the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 140 may be implemented as a single core processor including one core, or may be implemented as one or more multicore processors including a plurality of cores (e.g., multicores of the same kind or multicores of different kinds). In case the at least one processor 140 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be implemented by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto. Hereinafter, the at least one processor 140 will be referred to as the processor 140, for the convenience of explanation.

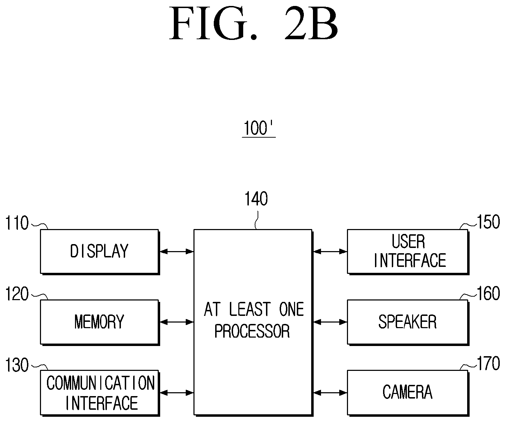

FIG. 2B is a block diagram illustrating in detail a configuration of an electronic apparatus according to an embodiment of the disclosure.

According to FIG. 2B, the electronic apparatus 100' may include a display 110, a memory 120, at least one processor 140, a communication interface 130, a user interface 150, a speaker 160, and a camera 170. Among the components illustrated in FIG. 2B, regarding components overlapping with the components illustrated in FIG. 2A, detailed explanation will be omitted.

The communication interface 130 may be implemented as various interfaces depending on implementation examples of the electronic apparatus 100'. For example, the communication interface 130 may perform communication with an external apparatus, an external storage medium (e.g., a USB memory), an external server (e.g., a webhard), etc. through communication methods such as Bluetooth, AP-based Wi-Fi (Wi-Fi, a wireless LAN network), Zigbee, a wired/wireless local area network (LAN), a wide area network (WAN), an Ethernet, the IEEE 1394, a high-definition multimedia interface (HDMI), a universal serial bus (USB), a mobile high-definition link (MHL), the Audio Engineering Society/European Broadcasting Union (AES/EBU), Optical, Coaxial, etc. Also, according to an embodiment, the communication interface 130 may perform communication with a remote control apparatus (not shown) and/or a user terminal (not shown) including a remote control function.

The user interface 150 may be implemented as a device such as a button, a touch pad, a mouse, and a keyboard, or may be implemented as a touch screen that can perform the aforementioned display function and a manipulation input function together, etc.

The speaker 160 may be a component that outputs not only various kinds of audio data but also various kinds of notification sounds or voice messages, etc. The processor 140 may control the speaker 160 to output information or various kinds of notifications corresponding to a UI screen according to various embodiments of the disclosure in audio forms.

The camera 170 may be turned on according to a predetermined event, and perform photographing. The camera 170 may convert a photographed image into an electric signal, and generate image data based on the converted signal. For example, a subject may be converted into an electric image signal through a semiconductor optical element (a charge coupled device (CCD)), and the image signal converted as such may be amplified and converted into a digital signal, and then go through signal processing.

The electronic apparatus 100' may additionally include a microphone, a tuner, and a demodulator depending on implementation examples. The microphone (not shown) is a component for receiving input of a user voice or other sounds and converting them into audio data. However, according to another embodiment, the electronic apparatus 100' may receive a user voice that was input through an external apparatus through the communication interface 130.

The tuner (not shown) may tune a channel selected by a user among radio frequency (RF) broadcasting signals received through an antenna, or all pre-stored channels, and receive an RF broadcasting signal. The demodulator (not shown) may receive a digital IF (DIF) signal converted at the tuner and demodulate the signal, and perform channel demodulation, etc.

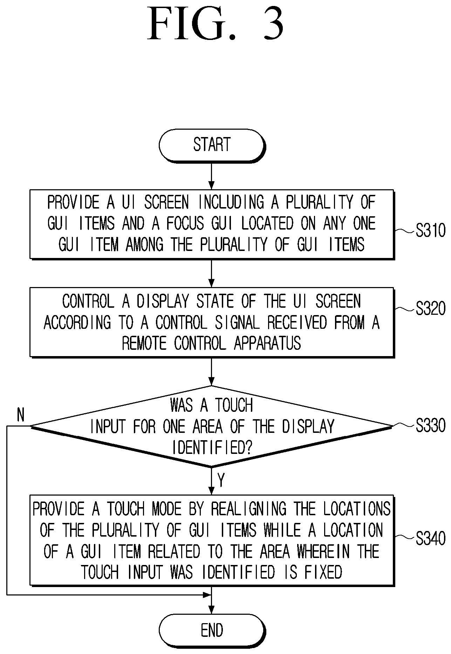

FIG. 3 is a diagram for illustrating a control method of an electronic apparatus according to an embodiment of the disclosure.

According to FIG. 3, in the operation S310, the electronic apparatus 100 may provide a UI screen including a plurality of GUI items and a focus GUI located on any one GUI item among the plurality of GUI items. Here, the GUI items may include various forms of images and/or texts corresponding to various types of contents such as an image content, a video content, an application, an advertising content, etc. For example, a GUI item may be a thumbnail, a representative image, a title, a description, etc. representing a corresponding content, and may include an image and/or a text that can identify the content.

According to an embodiment, the GUI items may be arranged in a specific direction such as a horizontal direction, a vertical direction, a symmetrical direction, etc., and may have a specific shape (e.g., a quadrangle, a rounded quadrangle, a circle, a rhombus, etc.). The focus GUI may be in a form of being highlighted on a rim of a GUI item, but is not necessarily limited thereto, and it may be highlighted on an entire GUI item, or highlighted on some rims. Here, the highlight may include various effects such as an illumination effect that an adjacent area is emphasized, a gradation effect, a ray effect, etc.

In the operation S320, the electronic apparatus 100 may control a display state of the UI screen according to a control signal received from the remote control apparatus 200. Hereinafter, a mode of controlling a UI screen by using a focus GUI according to a control signal received from the remote control apparatus 200 will be referred to as a focus mode. For example, the electronic apparatus 100 may control moving of the focus GUI or moving of a GUI item according to a control signal according to press manipulations of four direction keys provided on the remote control apparatus 200.

In the operation S330, if a touch input for one area of the display is identified while the electronic apparatus 100 is operating in the focus mode in operation S330:Y, the electronic apparatus 100 may provide the touch mode by realigning the locations of the plurality of GUI items while the location of the GUI item related to the area wherein the touch input was identified is fixed in the operation S340. For example, the electronic apparatus 100 may realign the locations of the GUI items such that the GUI items ascend from the lower area to the upper area, or the GUI items descend from the upper area to the lower area based on the point of the touch input.

Meanwhile, in FIG. 3, the order was mapped to all steps for the convenience of explanation, but it is obvious that the order of steps which are regardless of an order, or can be performed in parallel, etc. is not necessarily limited to the order.

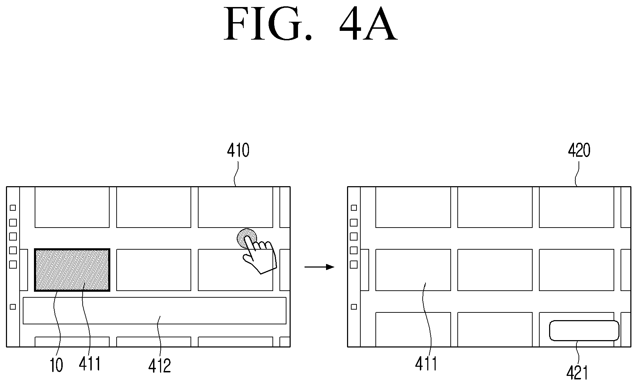

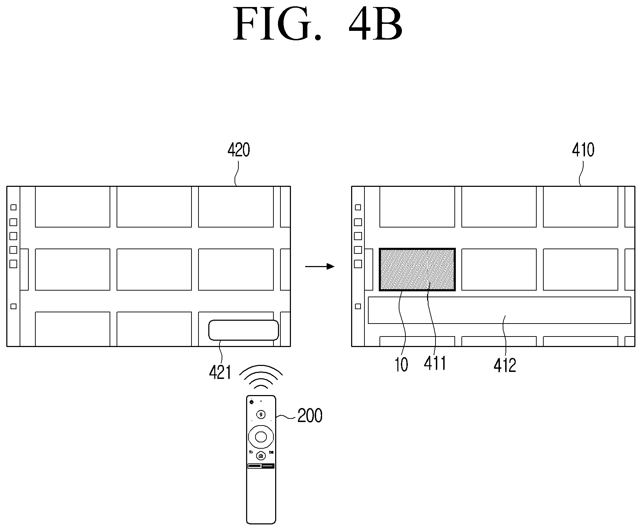

FIG. 4A and FIG. 4B are diagrams for illustrating basic operations in a focus mode and a touch mode according to an embodiment of the disclosure.

According to FIG. 4A, the electronic apparatus 100 may provide a first UI screen 410 including a plurality of GUI items and a focus GUI 10 located on any one GUI item 411 among the plurality of GUI items in the focus mode. The electronic apparatus 100 may control the first UI screen 410 by moving the focus GUI 10, or fixing the location of the focus GUI 10 and moving the location of GUI items based on a control signal received from the remote control apparatus 200. For example, the first UI screen 410 may include an area 412 providing detailed information of the GUI item on which the focus GUI 10 is located. According to an embodiment, UI feedback may be provided to the GUI item on which the focus GUI 10 is located. The UI feedback may be a UI feedback emphasizing the GUI item on which the focus GUI 10 is located. For example, the UI feedback may include at least one of a UI feedback alternatingly changing the transparency of the GUI item, a UI feedback alternatingly changing the luminance (or the brightness) of the GUI item, a UI feedback enlarging the size of the GUI item, or a UI feedback alternatingly changing the size of the GUI item.

According to an embodiment, as illustrated in FIG. 4A, if a touch input is identified while the first UI screen 410 is being provided, the electronic apparatus 100 may provide a specified UX, e.g., a second UI screen 420 wherein the focus GUI 10 and an area 412 providing the detailed information of the GUI item on which the focus GUI 10 is located have disappeared from the screen in the focus mode. For example, the second UI screen 420 may include a floating menu 421 that is displayed to be overlaid on the screen. For example, the floating menu 421 may include a plurality of menu items corresponding to a plurality of functions that can be provided through the remote control apparatus 200. For example, the electronic apparatus 100 may output the second UI screen 420 and the floating menu 421 as different display layers. For example, the electronic apparatus 100 may output the second UI screen 420 as a first display layer, and output the floating menu 421 as a second display layer in the front part of the first display layer. Accordingly, even if an on screen display (OSD) menu is included in the second UI screen 420, the floating menu 421 can always be arranged in the uppermost part of the screen. According to an embodiment, the electronic apparatus 100 may obtain an output image by alpha blending the second UI screen 420 and the floating menu 421. Here, alpha blending means a method of, when overlaying another image on an image, allotting a new value which is alpha (A) to color values RGB, and mixing the background RGB values and the RGB values in the upper part thereof and displaying images, for exerting an effect as if the images are seen through transparently.

According to an embodiment, as illustrated in FIG. 4A, if the focus GUI 10 and the area 412 providing the detailed information of the GUI item 411 on which the focus GUI 10 is located disappear, the remaining GUI items may be realigned such that the locations of the GUI items related to the location of a touch input point are not changed. For example, the GUI items may be realigned as the GUI items in the lower part of the area 412 providing the detailed information of the GUI item 411 on which the focus GUI 10 is located ascend to the upper area.

According to an embodiment, as illustrated in FIG. 4B, if a control signal is received from the remote control apparatus 200 while the second UI screen 420 is being provided, the electronic apparatus 100 may provide the first UI screen 410 including the focus GUI 10 and the area 412 providing the detailed information of the GUI item on which the focus GUI 10 is located. For example, the electronic apparatus 100 may provide the focus GUI 10 to the GUI item 411 corresponding to a predetermined standard according to whether the focus GUI 10 is a fixed type or a movable type. The movable focus GUI is an item for controlling scrolling of a list according to a movable focus method, and according to a scroll input, the movable focus GUI may move in one direction, and GUI items included in a list may move to the opposite direction. The fixed focus GUI is an item for controlling scrolling of a list according to a fixed focus method, and according to a scroll input, the location of the fixed focus GUI may be fixed and GUI items included in a list may move in the scroll direction, and a new GUI item that was not provided on the UI screen may be provided to the UI screen.

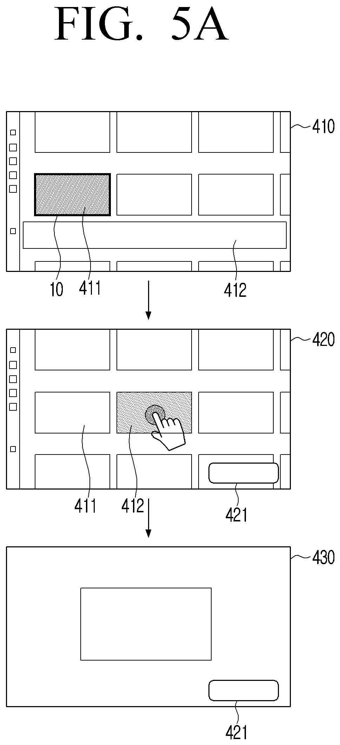

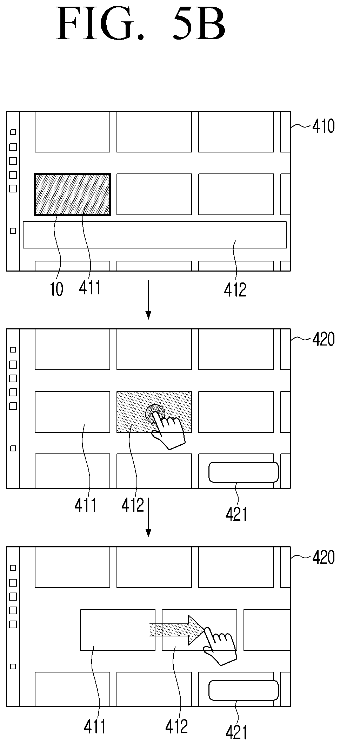

FIG. 5A and FIG. 5B are diagrams for illustrating operations according to conversion from a focus mode to a touch mode according to an embodiment of the disclosure.

According to FIG. 5A and FIG. 5B, if a touch input is identified while the first UI screen 410 is being provided in the focus mode, the electronic apparatus 100 may convert to a touch mode.

According to FIG. 5A, if a touch input is identified in the second GUI 412 while the focus GUI 10 is being provided to the first GUI item 411, the focus GUI 10 may disappear, and a touch feedback screen 430 corresponding to the second GUI item 412 may be provided. For example, a touch feedback may mean an operation of executing a function corresponding to a touch input. For example, a sub depth screen 430 of the second GUI item 412 may be provided. For example, the sub depth screen 430 of the second GUI item 412 may include a floating menu 431 in a default location (e.g., the right lower area).

According to FIG. 5B, if a touch input is identified in the second GUI 412 while the focus GUI 10 is being provided to the first GUI item 411, the focus GUI 10 may disappear, and a touch gesture may be identified according to a subsequent touch input, and an operation corresponding to the identified touch gesture may be performed. For example, a movement after a touch may be identified as a drag input, a release after a touch may be identified as a tap input, and a touch during a specific time or longer may be identified as a hold input. For example, as illustrated in FIG. 5B, if the second GUI item 412 is dragged, the GUI items may be moved in the drag direction and displayed. For example, different operations may be performed according to types of touch inputs. For example, in the case of a hold input, additional information for a GUI item wherein the hold input was identified may be provided, a pop-up UI may be provided, or an editing mode may be provided. In this case, the touch mode is maintained, and thus the floating menu 421 may be maintained in the default location (e.g., the right lower area).

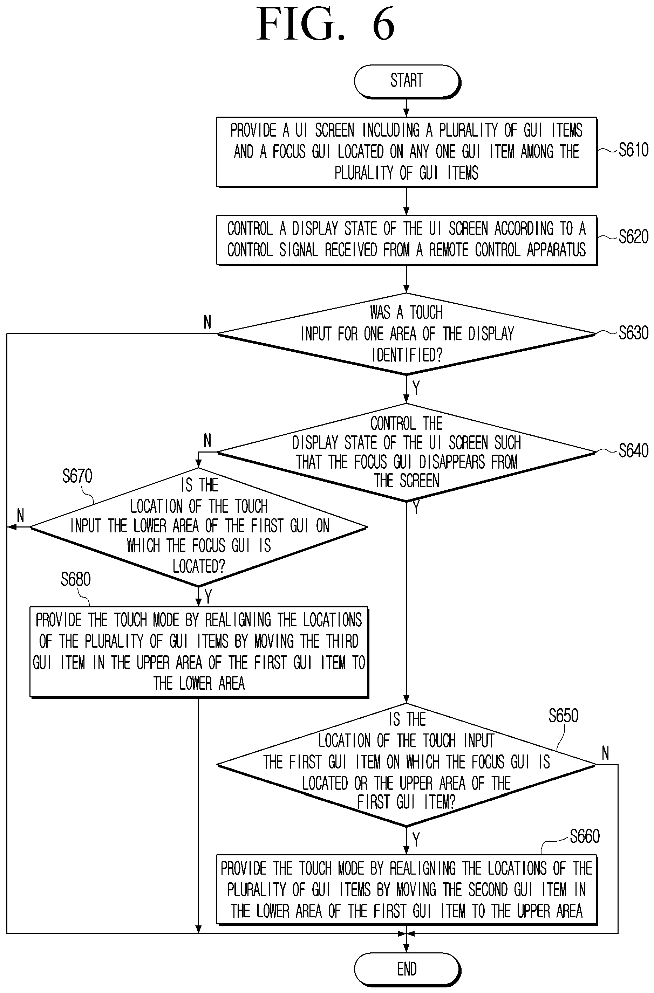

FIG. 6 is a flow chart for illustrating a control method of an electronic apparatus according to an embodiment of the disclosure.

According to FIG. 6, in the operation S610, the electronic apparatus 100 may provide a UI screen including a plurality of GUI items and a focus GUI located on any one GUI item among the plurality of GUI items.

In the operation S620, the electronic apparatus 100 may control a display state of the UI screen according to a control signal received from the remote control apparatus 200. For example, the electronic apparatus 100 may control the display state of the UI screen by using the focus GUI according to a control signal received from the remote control apparatus 200 in the focus mode wherein the focus GUI is provided.

In the operation S630, if a touch input for one area of the display 110 is identified in the focus mode in the operation S630:Y, the electronic apparatus 100 may control the display state of the UI screen such that the focus GUI disappears from the screen in the operation S640.

In the operation S650, if the location of the touch input is the first GUI item on which the focus GUI is located or the upper area of the first GUI item in the operation S650:Y, the electronic apparatus 100 may provide the touch mode by realigning the locations of the plurality of GUI items by moving the second GUI item in the lower area of the first GUI item to the upper area.

In the operation S670, if the location of the touch input is the lower area of the first GUI item on which the focus GUI is located in the operation S670:Y, the electronic apparatus 100 may provide the touch mode by realigning the locations of the plurality of GUI items by moving the third GUI item in the upper area of the first GUI item to the lower area in the operation S680.

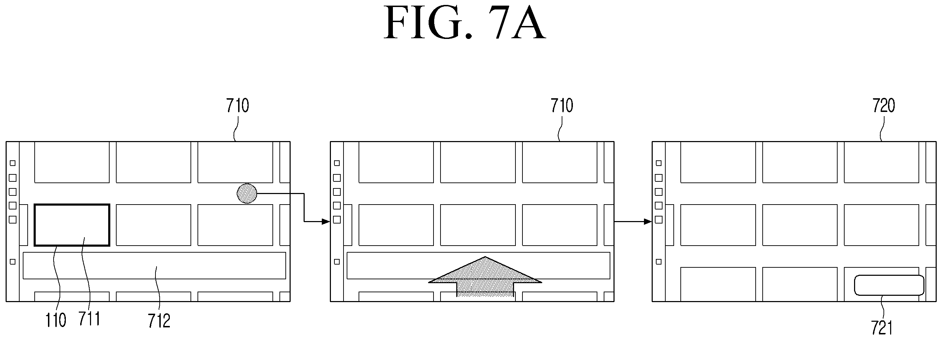

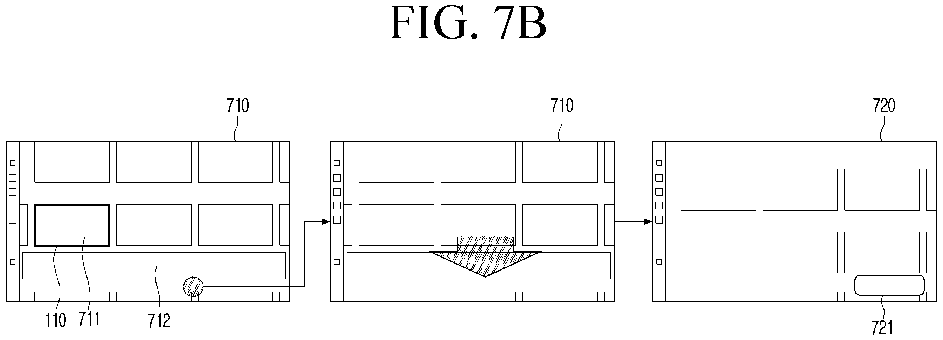

In FIG. 6, the recited operations were placed in a given order for convenience of explanation, but the order of operations is not necessarily limited to the order discussed herein. FIG. 7A and FIG. 7B are diagrams for illustrating operations according to conversion from a focus mode to a touch mode according to an embodiment of the disclosure.

According to FIG. 7A and FIG. 7B, the electronic apparatus 100 may provide a first UI screen 710 including a plurality of GUI items and a focus GUI 10 located on any one GUI item 711 among the plurality of GUI items. For example, the first UI screen 711 may include an area 712 providing detailed information of the GUI item 711 on which the focus GUI 10 is located.

According to an embodiment, if a touch input is identified on the first UI screen 710, the focus GUI 10 and the area 712 providing the detailed information of the GUI item 711 may disappear, and the mode may be converted to the touch mode.

For example, as illustrated in FIG. 7A, if a touch input is identified in the upper area of the GUI item 711 on which the focus GUI 10 is located, the electronic apparatus 100 may realign the GUI items in the lower area of the GUI item 711 by pushing them up to the disappeared area 712, and provide a second UI screen 720 corresponding to the touch mode. For example, the second UI screen 720 may include a floating menu 721 in a default location (e.g., a right lower area).

For example, as illustrated in FIG. 7B, if a touch input is identified in the lower area of the GUI item 711 on which the focus GUI 10 is located, the electronic apparatus 100 may realign the GUI items in the upper area of the location wherein the touch input was identified by pushing them down to the disappeared area 712, and provide the second UI screen 720 corresponding to the touch mode. For example, the second UI screen 720 may include the floating menu 721 in the default location (e.g., the right lower area).

According to the aforementioned embodiment, the electronic apparatus 100 can provide screen conversion that is as seamless as possible while maintaining a D text on the UX side even if an input mode is changed, by preventing the UI screen from moving as much as possible based on a location wherein a user touched.

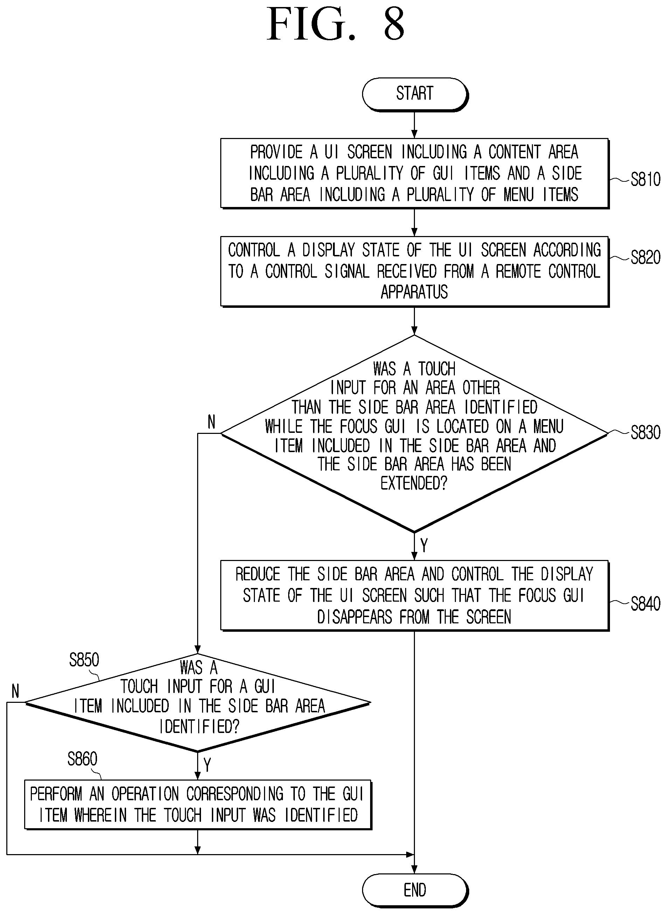

FIG. 8 is a flow chart for illustrating a control method of an electronic apparatus according to an embodiment of the disclosure.

According to FIG. 8, in the operation S810, the electronic apparatus 100 may provide a UI screen including a content area including a plurality of GUI items, and a side bar area including a plurality of menu items. According to an embodiment, in the side bar area, a menu item for selecting a UI home type, a setting menu item, etc. may be included.

In the operation S820, the electronic apparatus 100 may control a display state of the UI screen according to a control signal received from the remote control apparatus 200. For example, the electronic apparatus 100 may control the display state of the UI screen by using the focus GUI according to a control signal received from the remote control apparatus 200 in the focus mode wherein the focus GUI is provided.

In the operation S830, while the focus GUI is located on a menu item included in the side bar area and the side bar area has been extended, the electronic apparatus 100 may identify whether a touch input is a touch input for an area other than the side bar area.

Also, in the operation S830, if the touch input is identified as a touch input for an area other than the side bar area in the operation S830:Y, the electronic apparatus 100 may reduce (or close) the side bar area, and control the display state of the UI screen such that the focus GUI disappears from the screen in the operation S840.

Further, in the operation S830, if the touch input is identified as a touch input for the GUI item included in the side bar area in the operation S850:Y, the electronic apparatus 100 may perform an operation corresponding to the GUI item wherein the touch input was identified in the operation S860.

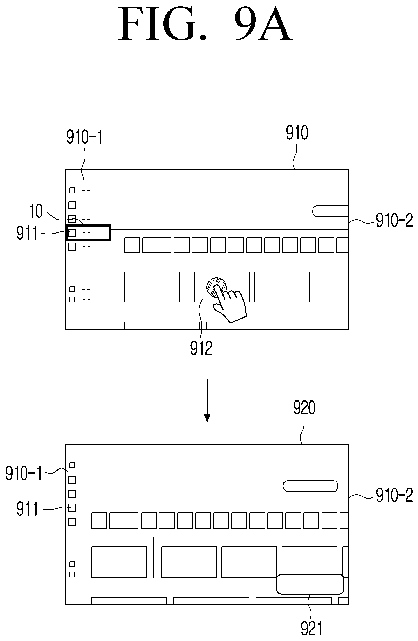

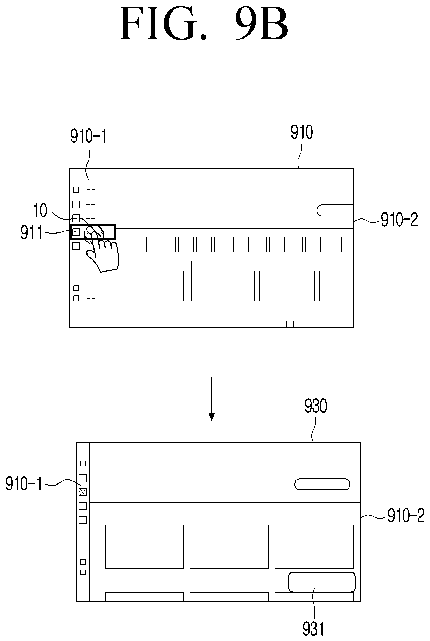

Meanwhile, in FIG. 8, the order was mapped to all steps for the convenience of explanation, but it is obvious that the order of steps which are regardless of an order, or can be performed in parallel, etc. is not necessarily limited to the order. FIG. 9A and FIG. 9B are diagrams for illustrating operations according to conversion from a focus mode to a touch mode according to an embodiment of the disclosure.

According to FIG. 9A and FIG. 9B, the electronic apparatus 100 may provide a first UI screen 910 including a side bar area 910-1 and a content area 910-2 in the focus mode. For example, the side bar area 910-1 may be in an extended state, and the focus GUI 10 may be located on a menu item 911 included in the side bar area.

According to FIG. 9A, if a touch input for a GUI item 912 located in an area other than the side bar area 910-1, e.g., the content area 910-2 is identified, the electronic apparatus 100 may reduce the side bar area 910-1, and provide a second UI screen 920 wherein the focus GUI 10 disappeared. For example, the content area 910-2 in the first UI screen 910 may be maintained in the second UI screen 920, and a floating menu 921 may be provided in a default location (e.g., a right lower area) of the second UI screen 920.

According to FIG. 9B, if a touch input for any area inside the side bar area 910-1 on which the focus GUI 10 is located is identified, the electronic apparatus 100 may perform an operation corresponding to a subsequent touch input after a subsequent touch input is received. For example, in case a subsequent touch input is an input tapping a menu item 911 of a specific category located in the side bar area 910-1, the electronic apparatus 100 may provide a third UI screen 930 corresponding to the menu item 911. For example, the content area 910-2 in the first UI screen 910 may be changed to a content area corresponding to the menu item 911 in the third UI screen 930, and a floating menu 931 may be provided in a default location (e.g., a right lower area) of the third UI screen 930. In this case, if a touch input for any area wherein there is no menu item is identified in the side bar area 910-1, the electronic apparatus 100 may reduce the side bar area 910-1.

As another example, if a touch input for the menu item 911 on which the focus GUI 10 is located is identified, the electronic apparatus 100 may immediately reduce the side bar area 910-1, and provide the third UI screen 930 corresponding to the menu item 911 on which the focus GUI 10 is located.

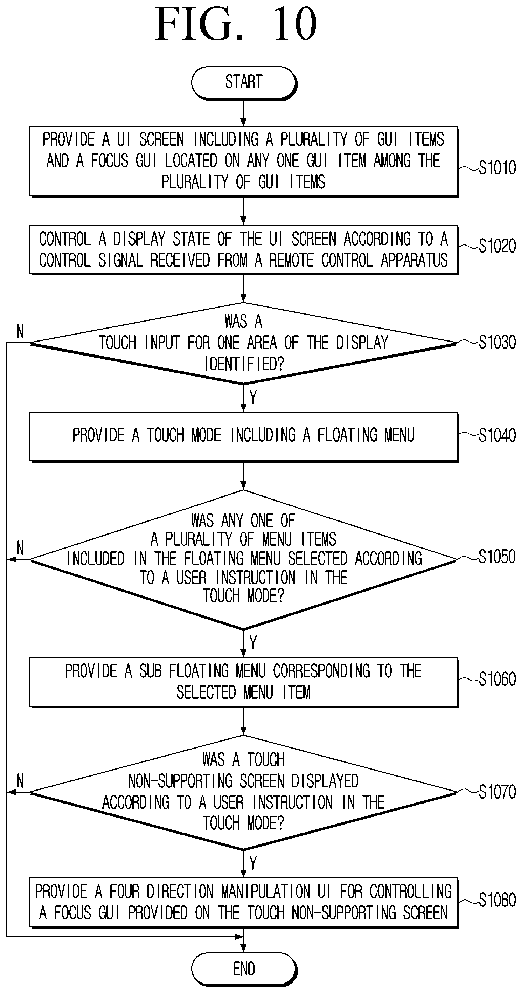

FIG. 10 is a flow chart for illustrating a control method of an electronic apparatus according to an embodiment of the disclosure.

According to FIG. 10, in the operation S1010, the electronic apparatus 100 may provide a UI screen including a plurality of GUI items and a focus GUI located on any one GUI item among the plurality of GUI items.

In the operation S1020, the electronic apparatus 100 may control a display state of the UI screen according to a control signal received from the remote control apparatus 200.

In the operation S1030, if a touch input for one area of the display 110 is identified in the operation S1030:Y, the electronic apparatus 100 may provide the touch mode including a floating menu in the operation S1040. For example, the floating menu may include a plurality of menu items corresponding to a plurality of functions that can be provided through the remote control apparatus 200.

In the operation S1050, if any one of the plurality of menu items included in the floating menu is selected according to a user instruction in the touch mode in the operation S1050:Y, the electronic apparatus 100 may provide a sub floating menu corresponding to the selected menu item in the operation S1060. For example, the sub floating menu may include menu items corresponding to a sub menu of the selected menu item.

In the operation S1070, if a touch non-supporting screen is displayed according to a user instruction in the touch mode in the operation S1070:Y, the electronic apparatus 100 may provide a four direction manipulation UI for controlling a focus GUI provided on the touch non-supporting screen in the operation S1080. For example, an application screen provided at a specific third party may not support the touch mode. In this case, the electronic apparatus 100 may provide a four direction manipulation UI for controlling the focus GUI provided on the application screen, as it is in a state of supporting the touch mode.

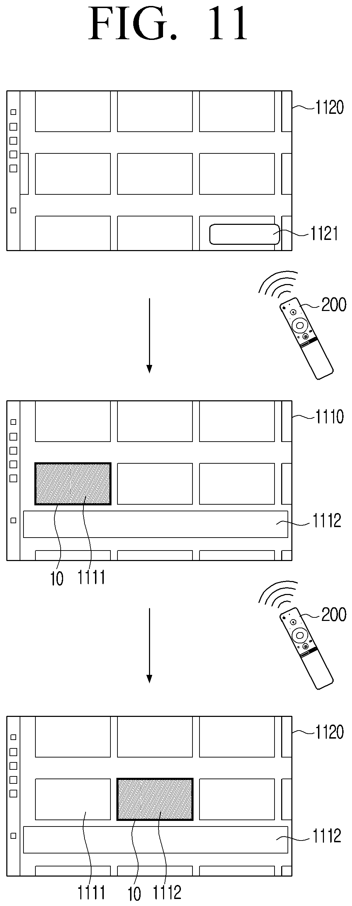

FIG. 11 is a diagram for illustrating operations according to conversion from a touch mode to a focus mode according to an embodiment of the disclosure.

According to FIG. 11, the electronic apparatus 100 may provide a second UI screen 1120 including a floating menu 1121 in the touch mode.

According to an embodiment, as illustrated in FIG. 11, if a control signal is received from the remote control apparatus 200 while the second UI screen 1120 is being provided in the touch mode, the electronic apparatus 100 may convert the mode to the focus mode by providing a first UI screen 1110 that includes a focus GUI 10 and an area 1112 providing detailed information of a GUI item 1111 on which the focus GUI 10 is located, and does not include the floating menu 1121. For example, on the first UI screen 1110, the area 1112 providing the detailed information of the GUI item 1111 on which the focus GUI 10 is located is newly displayed, and thus the display locations of the remaining GUI items may be realigned.

Afterwards, the electronic apparatus 100 may perform an operation corresponding to the control signal from the remote control apparatus 200 in the focus mode. For example, as illustrated in FIG. 11, the electronic apparatus 100 may move the focus GUI 10 to the GUI item 1112 according to a control signal for moving the focus GUI 10.

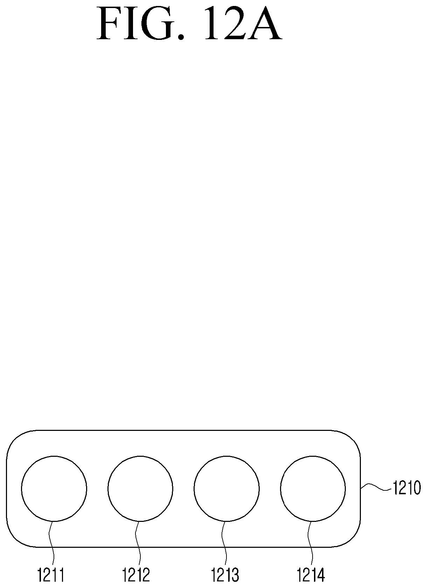

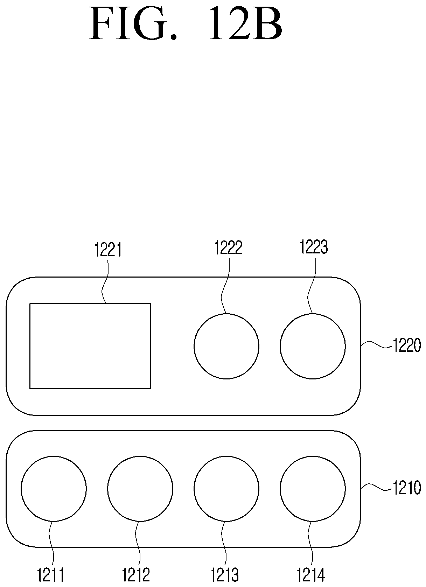

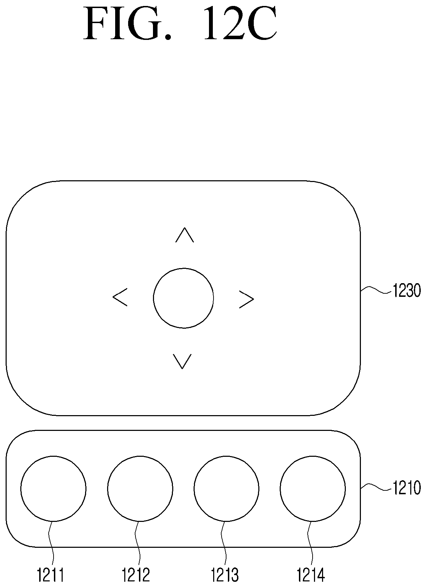

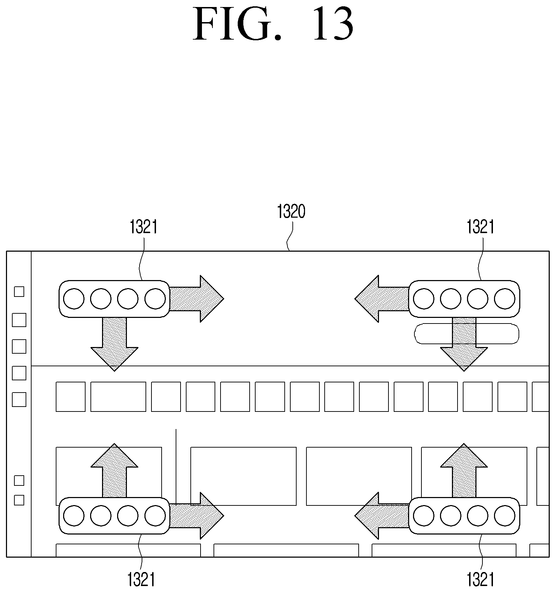

FIG. 12A, FIG. 12B, FIG. 12C, and FIG. 13 are diagrams for illustrating a configuration and operations of a floating menu according to an embodiment of the disclosure.

According to FIG. 12A, the basic floating menu 1210 may include basic menu items 1211, 1212, 1213, 1214 corresponding to a plurality of functions that can be provided through the remote control apparatus 200. For example, the basic floating menu 1210 may include menu items corresponding to each of Return, Home, Quick Panel, and Volume. In FIG. 12A, it was illustrated that there are four basic menu items included in the basic floating menu 1210, but the disclosure is not necessarily limited thereto. For example, basic menu items such as Channel, Source, Touch lock, etc. may be further included in the basic floating menu 1210. For example, the basic menu items may be provided in a form of being displayed simultaneously, or being additionally displayed by a scroll manipulation.

According to FIG. 12B, if any one of the basic menu items 1211, 1212, 1213, 1214 included in the basic floating menu 1210 is selected by a touch input, information 1221, 1222, 1223 corresponding to a sub menu of the selected basic menu item may be provided to a sub floating menu 1220. For example, information related to variation of the basic floating menu items may be provided through the sub floating menu 1220. For example, the information 1221, 1222, 1223 corresponding to the sub menu may include detailed information of the selected basic menu item (a text or an image), a sub menu item corresponding to the sub menu, etc. For example, in case the "Volume" item was selected in the basic floating menu 1210, a sub menu item corresponding to the volume -/+ button of the remote control apparatus 200 may be provided through the sub floating menu 1220.

According to FIG. 12C, an additional floating menu 1230 may be provided other than the basic floating menu 1210. According to an embodiment, when entering a screen not supporting a touch input, e.g., an application screen not supporting a touch input, a UI for navigating a focus GUI provided on the application screen (e.g., a four direction manipulation UI) may be provided to the additional floating menu 1230. In this case, the user can control moving of the focus GUI provided on the application screen through a touch input on the additional floating menu 1230.

According to FIG. 13, the floating menu 1321 may be provided in a predetermined default location on a UI screen 1320 provided in the touch mode. For example, the floating menu 1321 may be provided to the right lower area of the UI screen 1320.

According to an embodiment, the floating menu 1321 may be moved to a plurality of predetermined locations according to a user's touch input. For example, as illustrated in FIG. 13, the floating menu 1321 may be moved to any one of the four corner areas of the UI screen 1320 according to the user's touch and hold input. However, the predetermined locations are not limited thereto, and they may be determined as a plurality of locations in the right boundary line area or a plurality of locations in the left boundary line area of the UI screen 1320.

According to an embodiment, in case the floating menu 1321 is moved to a location that is not the predetermined location according to a user's touch input, the floating menu 1321 may be automatically moved to the closest predetermined location from the moved location according to a magnet effect and located in the location.

As described above, as a floating menu that is overlaid on the screen is always provided in the touch mode, a user can be made to perform navigation and appreciation of a content by more easily accessing the main functions of the electronic apparatus 100.

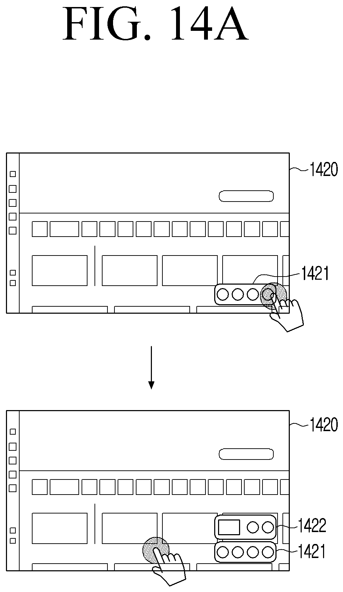

FIG. 14A to FIG. 14D are diagrams for illustrating an interaction method of a floating menu according to an embodiment of the disclosure.

According to FIG. 14A, if one of menu items included in the floating menu 1421 provided on the UI screen 1420 is selected by the user's touch input in the touch mode, the electronic apparatus 100 may provide a sub floating menu 1422 (or a sub panel) corresponding to the selected menu item. For example, if the menu item selected by the user's touch input is reselected, or an external area of the floating menu 1421 is selected, the electronic apparatus 100 may make the sub floating menu 1422 disappear.

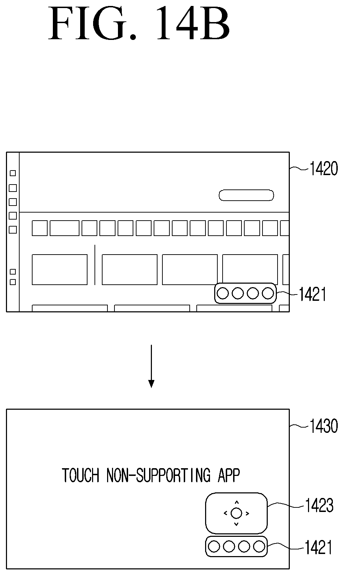

According to FIG. 14B, in case a specific GUI item is selected by the user's touch input while the UI screen 1420 including the floating menu 1421 is provided in the touch mode, and a touch non-supporting screen is provided, the electronic apparatus 100 may provide an additional floating menu 1423. For example, the electronic apparatus 100 may provide the additional floating menu 1423 in the upper area of the floating menu 1421. For example, when entering an application screen that does not support a touch input, the electronic apparatus 100 may provide a UI for navigating a focus GUI provided on the application screen (e.g., a four direction manipulation UI) to the additional floating menu 1423. In this case, the user can control moving of the focus GUI provided on the application screen through a touch input on the additional floating menu 1423. For example, the electronic apparatus 100 may make the additional floating menu 1423 disappear when returning to the touch supporting screen.

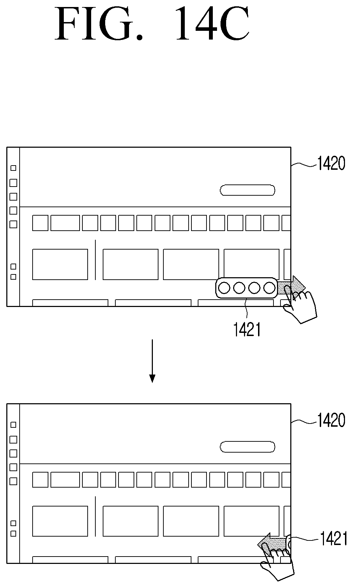

According to FIG. 14C, the electronic apparatus 100 may hide the floating menu 1421 in the outside of the screen according to the user's touch drag input or touch flick input while the UI screen 1420 including the floating menu 1421 is provided in the touch mode, and display only a handler GUI. In this case, the electronic apparatus 100 may provide the floating menu 1421 on the screen again according to the user's touch drag input or touch flick input for the handler GUI.

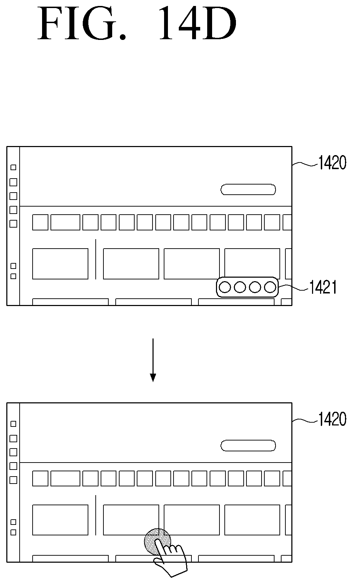

According to FIG. 14D, in case a touch input is not identified during a predetermined time or longer while the UI screen 1420 including the floating menu 1421 is provided in the touch mode, the electronic apparatus 100 may make the floating menu 1421 disappear from the screen. In this case, if a touch input is identified, the electronic apparatus 100 may display the floating menu 1421 again.

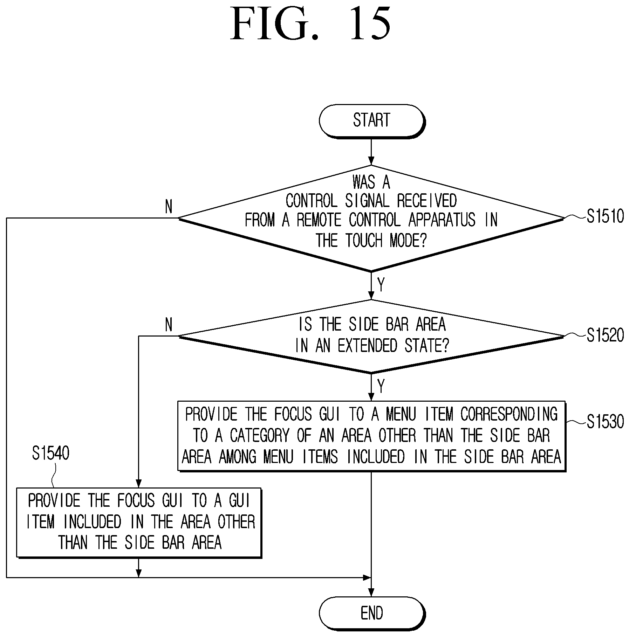

FIG. 15 is a flow chart for illustrating a control method of an electronic apparatus according to an embodiment of the disclosure.

According to FIG. 15, in the operation S1510, if a control signal is received from the remote control apparatus 200 in the touch mode in the operation S1510:Y, the electronic apparatus 100 may identify whether the side bar area is in an extended state in the operation S1520.

In the operation S1520, if the side bar area is identified to be in an extended state in the operation S1520:Y, the electronic apparatus 100 may provide a focus GUI to a menu item corresponding to a category of an area other than the side bar area among the menu items included in the side bar area in the operation S1530. For example, if the touch mode is converted to the focus mode according to a control signal received from the remote control apparatus 200, and the side bar area is in an extended state, the electronic apparatus 100 may provide the focus GUI to a menu item within the side bar area corresponding to the category provided to the content area.

In the operation S1520, if it is identified that the side bar area is not in an extended state in the operation S1520:N, the electronic apparatus 100 may provide the focus GUI to a GUI item included in an area other than the side bar area. For example, if the touch mode is converted to the focus mode according to a control signal received from the remote control apparatus 200, and the side bar area is not in an extended state, the electronic apparatus 100 may provide the focus GUI to a GUI item in a predetermined location among the GUI items included in the content area.

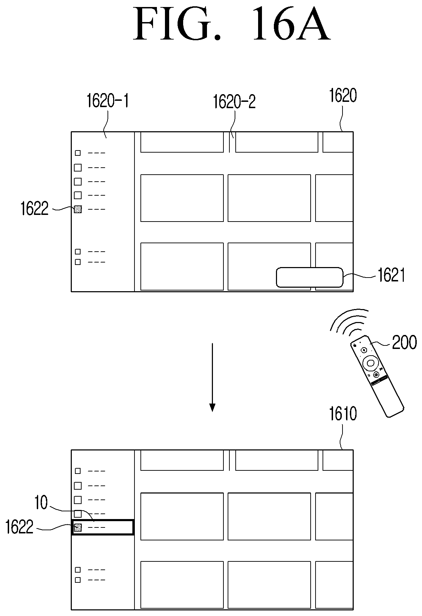

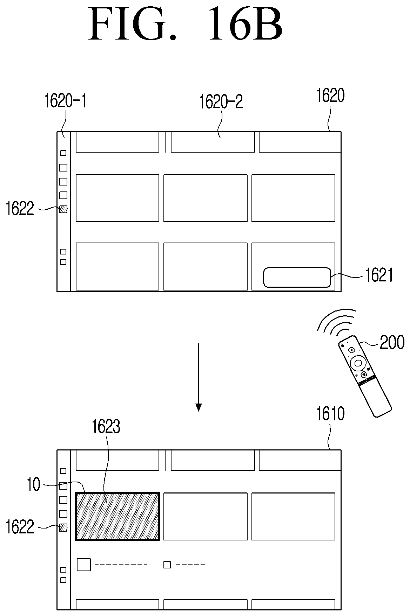

FIG. 16A and FIG. 16B are diagrams for illustrating operations according to conversion from a touch mode to a focus mode according to an embodiment of the disclosure.

According to FIG. 16A and FIG. 16B, the electronic apparatus 100 may provide a second UI screen 1620 including a side bar area 1620-1 and a content area 1620-2 in the touch mode. For example, a floating menu 1621 may be provided in the right lower area of the second UI screen 1620. Afterwards, the electronic apparatus 100 may convert the touch mode to the focus mode according to a control signal received from the remote control apparatus 200.

According to FIG. 16A, if a control signal is received from the remote control apparatus 200 while the side bar area 1620-1 is extended, the electronic apparatus 100 may provide a focus GUI 10 to a menu item 1622 of the category corresponding to the content area 1620-2 among the menu items included in the side bar area 1620-1. This is because there is relatively high probability for the user to manipulate the side bar area 1620-1, as the state wherein the side bar area 1620-1 is extended, i.e., the state wherein the side bar area 1620-1 is being manipulated in the touch mode is converted to the focus mode.

According to FIG. 16B, if a control signal is received from the remote control apparatus 200 while the side bar area 1620-1 is reduced (or closed), the electronic apparatus 100 may provide the focus GUI 10 to a GUI item 1623 in a predetermined location included in the content area 1620-2. This is because there is relatively high probability for the user to manipulate the content area 1620-2, as the state wherein the side bar area 1620-1 is reduced, i.e., the state wherein the content area 1620-2 is being manipulated in the touch mode is converted to the focus mode.

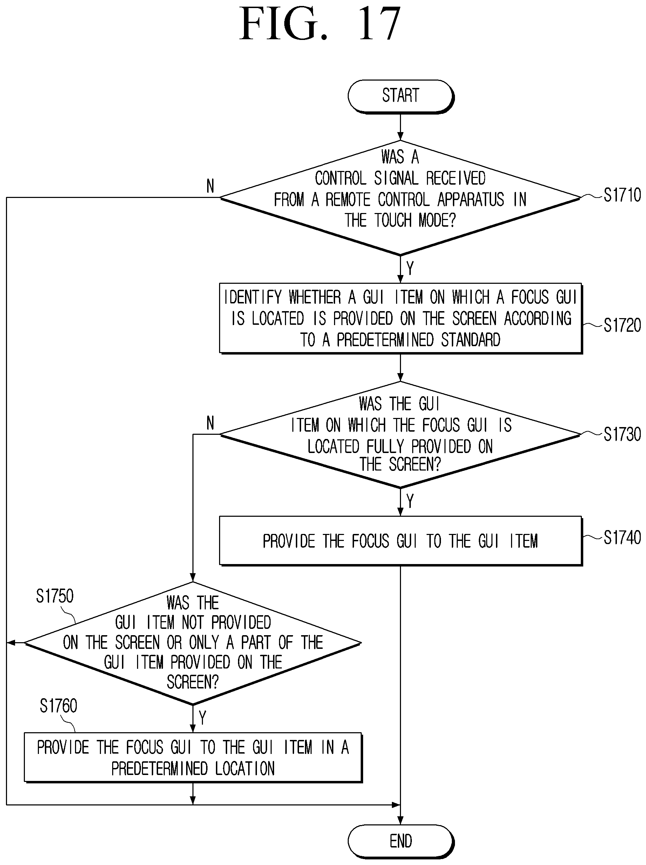

FIG. 17 is a diagram for illustrating a control method of an electronic apparatus according to an embodiment of the disclosure.

According to FIG. 17, in the operation S1710, if a control signal is received from the remote control apparatus 200 in the touch mode in the operation S1710:Y, the electronic apparatus 100 may identify whether a default GUI item according to a predetermined standard is provided on the screen in the operation S1720. Here, the predetermined standard may vary according to the manufacturer, the control method of the focus GUI, the type of the UI screen, etc.

In the operation S1730, if it is identified that the default GUI item is fully provided on the screen in the operation S1730:Y, the electronic apparatus 100 may provide the focus GUI to the GUI item in the operation S1740. Here, the feature that the GUI item is fully provided on the screen may mean that the entire graphic of the GUI item is displayed on the screen.

In the operation S1750, if it is identified that the default GUI item is not provided on the screen, or only a part of the default GUI item is provided on the screen in the operation S1750:Y, the electronic apparatus 100 may provide the focus GUI to another GUI item in a predetermined location in the operation S1760. Here, the predetermined location may vary according to the manufacturer, the control method of the focus GUI, the type of the UI screen, etc.

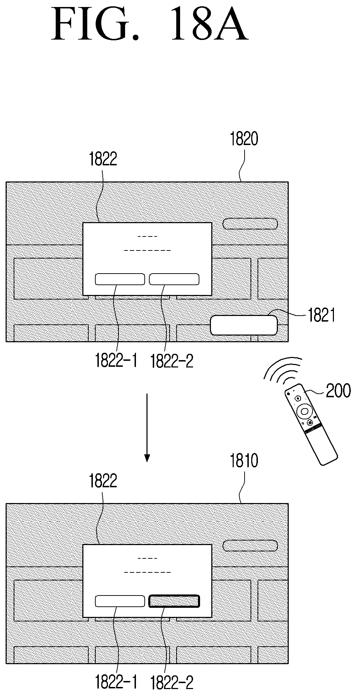

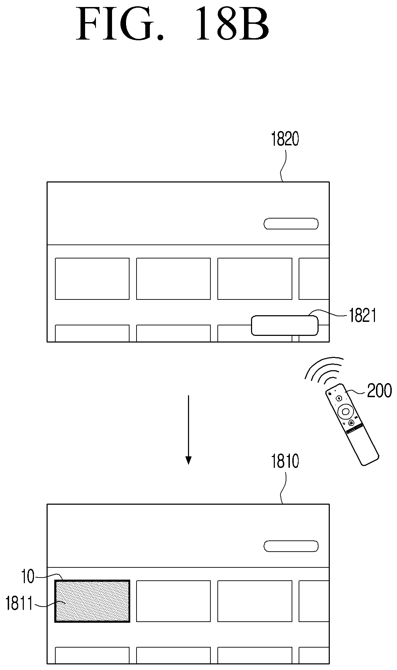

FIG. 18A and FIG. 18B are diagrams for illustrating operations according to conversion from a touch mode to a focus mode according to an embodiment of the disclosure.

According to an embodiment, the electronic apparatus 100 may provide a focus GUI to a default item included in the screen when converting from the touch mode to the focus mode. For example, the electronic apparatus 100 may provide the focus GUI to an item according to a predetermined standard among items that can be selected by the focus GUI within the screen. Here, the predetermined standard may vary according to the manufacturer, the control method of the focus GUI, the type of the UI screen, etc.

According to FIG. 18A, the electronic apparatus 100 may provide a second UI screen 1820 including a floating menu 1821 and a pop-up UI 1822 in the touch mode. For example, the second UI screen 1820 may be a UI screen wherein scrolling is impossible. In this case, if a control signal is received from the remote control apparatus 200 while the second UI screen 1820 is being provided, the electronic apparatus 100 may convert the mode to the focus mode by providing the focus GUI 10 to menu selection buttons 1822-1, 1822-2 included in the pop-up UI 1822.

According to FIG. 18B, the electronic apparatus 100 may provide the second UI screen 1820 including the floating menu 1821 in the touch mode. For example, the second UI screen 1820 may be a UI screen wherein scrolling is possible. In this case, if a control signal is received from the remote control apparatus 200 while the second UI screen 1820 is being provided, the electronic apparatus 100 may identify whether a default item 1811 according to a predetermined standard (e.g., the item in the uppermost and leftmost area in the item list) is fully displayed within the screen. In case the default item 1811 is fully displayed within the screen, the electronic apparatus 100 may convert the mode to the focus mode by providing the focus GUI 10.

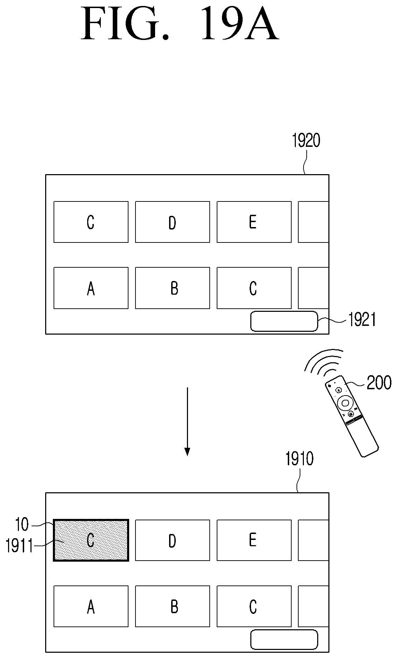

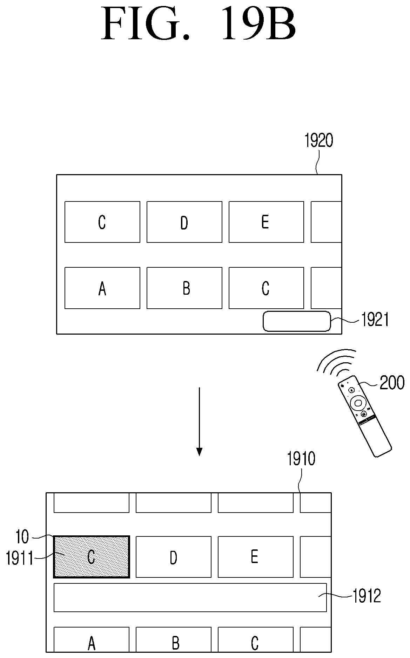

FIG. 19A and FIG. 19B are diagrams for illustrating operations according to conversion from a touch mode to a focus mode according to an embodiment of the disclosure.

According to FIG. 19A and FIG. 19B, the electronic apparatus 100 may provide a second UI screen 1920 including a floating menu 1921 in the touch mode. For example, the second UI screen 1920 may be a UI screen wherein scrolling is possible, and may be in a state wherein a scrolling manipulation occurred in the touch mode.

According to FIG. 19A, in case a default item (e.g., the item in the uppermost and leftmost area in the item list) is not fully displayed within the screen, the electronic apparatus 100 may provide the focus GUI 10 to another GUI item 1911 in a predetermined location. For example, the electronic apparatus 100 may provide the focus GUI 10 to the item 1911 in the uppermost and leftmost area that is fully displayed within the screen.

According to FIG. 19B, in case the default item (e.g., the item in the uppermost and leftmost area in the item list) is not fully displayed within the screen, the electronic apparatus 100 may provide the focus GUI 10 to the another GUI item 1911 in the predetermined location. For example, the electronic apparatus 100 may provide the focus GUI 10 to the item 1911 in the uppermost and leftmost area that is fully displayed within the screen, and display detailed information 1912 corresponding to the item 1911 on which the focus GUI 10 is located in the lower area of the item 1911.

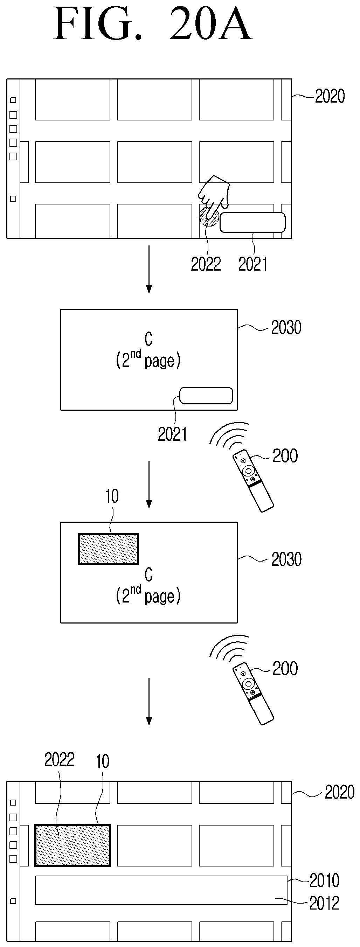

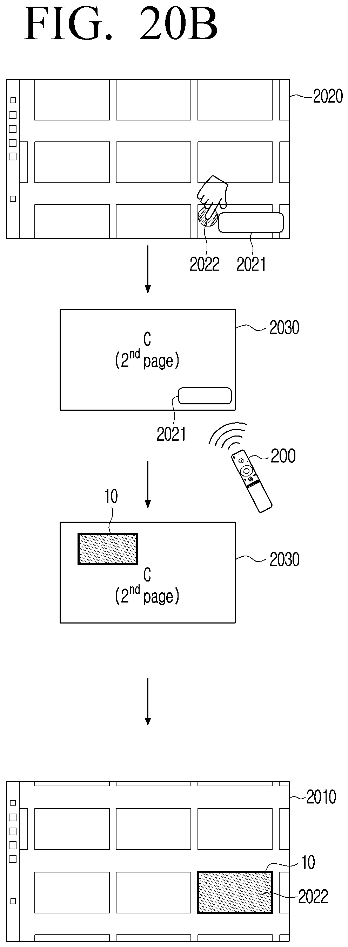

FIG. 20A and FIG. 20B are diagrams for illustrating operations according to conversion from a touch mode to a focus mode according to an embodiment of the disclosure.

According to FIG. 20A and FIG. 20B, the electronic apparatus 100 may provide a second UI screen 2020 including a floating menu 2021 in the touch mode. According to an embodiment, a specific GUI item 2022 may be selected on the second UI screen 2020, and a sub depth screen 2030 may be entered. In this case, on the sub depth screen 2030, the floating menu 2021 may be maintained. If a control signal is received from the remote control apparatus 200 while the sub depth screen 2030 is being provided, the focus GUI 10 may be provided to one area of the sub depth screen 2030. In case the screen returns to the original screen according to the control signal from the remote control apparatus 200 (e.g., a return signal), the focus GUI 10 may be located on the GUI item 2022 that was executed in the previous screen. In this case, the electronic apparatus 100 may provide the first UI screen 2010 by realigning the GUI items according to the control method of the focus GUI 10.

According to FIG. 20A, in case the focus GUI 10 is a fixed focus GUI displayed on the leftmost side of the central line, the electronic apparatus 100 may realign the GUI items by moving them to the left side, such that the GUI item 2022 that was executed on the previous screen is located on the focus GUI 10 displayed on the leftmost side of the central line.

According to FIG. 20B, in case the focus GUI 10 is a movable type, the electronic apparatus 100 may realign the GUI items by moving them to the upper side such that the GUI item 2022 that was executed on the previous screen is fully displayed on the screen, and provide the focus GUI 10 to the fully displayed GUI item 2022.

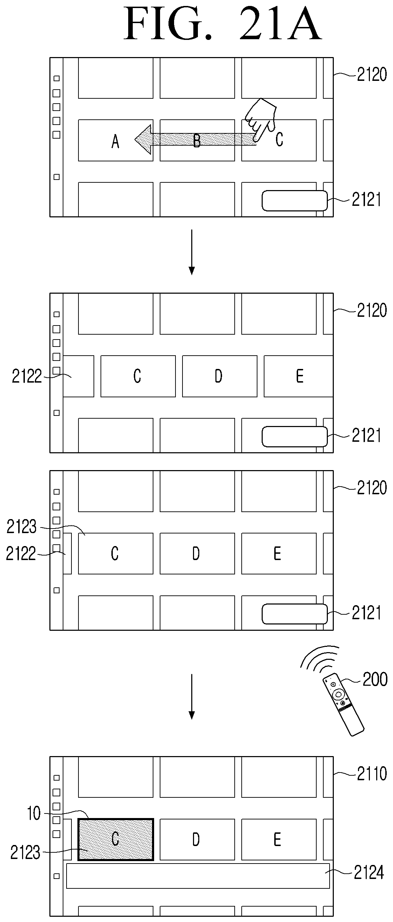

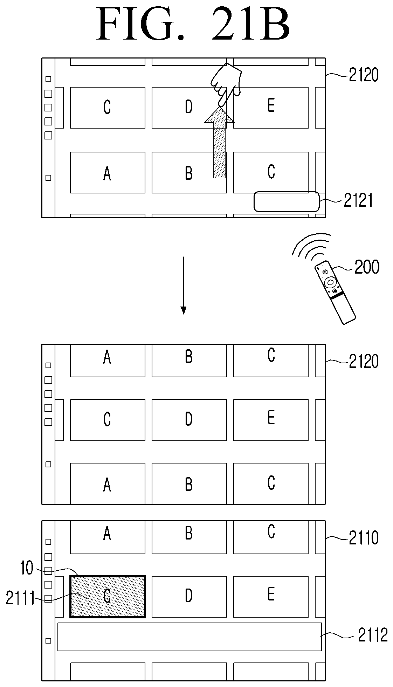

FIG. 21A and FIG. 21B are diagrams for illustrating operations according to conversion from a touch mode to a focus mode according to an embodiment of the disclosure.

According to FIG. 21A, the electronic apparatus 100 may provide a second UI screen 2120 including a floating menu 2121 in the touch mode. According to an embodiment, the electronic apparatus 100 may perform alignment of the GUI items according to a scroll input by different methods in the touch mode, according to whether the scroll input is in a left-right direction, or in an up-down direction.

According to an embodiment, as illustrated in FIG. 21A, if a scroll touch input in a left or right direction is identified on the second UI screen 2120, the GUI items may be displayed by realigning their locations on a time point of touch release. For example, as illustrated in FIG. 21A, in case the locations of the GUI items 2122, 2123, ... included in the second GUI list are not aligned with the locations of the GUI items included in another GUI line according to a scroll touch input in the left direction in the second GUI list, the GUI items 2122, 2123, ... may be realigned. Afterwards, when the mode is converted to the focus mode as a control signal is received from the remote control apparatus 200, the focus GUI 10 can be displayed on the GUI item 2123 that was already realigned, and thus it is not necessary to realign the items. For example, if the focus GUI 10 is displayed on the GUI item 2123 on the first UI screen 2110 provided in the focus mode, detailed information corresponding to the GUI item 2123 may be provided to the lower area 2124 of the GUI item 2323.

According to an embodiment, as illustrated in FIG. 21B, if a scroll touch input in the upper or lower direction is identified on the second UI screen 2120, the GUI items may be displayed by moving their locations on a time point of touch release. Afterwards, when the mode is converted to the focus mode as a control signal is received from the remote control apparatus 200, the GUI items may be displayed by realigning their locations according to whether the focus GUI 10 is a fixed type or a movable type.

According to the aforementioned various embodiments, in conversion between a focus mode and a touch mode on a screen wherein both of a remote control input and a touch input are possible, it is necessary to provide a UI/UX experience of seamlessly converting between the modes based on characteristics of each mode while maintaining a context that a user was using.

Methods according to the aforementioned various embodiments of the disclosure may be implemented in forms of applications that can be installed on a conventional electronic apparatus. Alternatively, the methods according to the aforementioned various embodiments of the disclosure may be performed by using an artificial neural network based on deep learning (or a deep artificial neural network), i.e., a learning network model.

Also, the methods according to the aforementioned various embodiment of the disclosure may be implemented just with software upgrade, or hardware upgrade for a conventional electronic apparatus.

In addition, the aforementioned various embodiment of the disclosure may also be performed through an embedded server provided on an electronic apparatus, or an external server of an electronic apparatus.

According to an embodiment of the disclosure, the aforementioned various embodiments may be implemented as software including instructions stored in machine-readable storage media, which can be read by machines (e.g., computers). The machines refer to apparatuses that call instructions stored in a storage medium, and can operate according to the called instructions, and the apparatuses may include an electronic apparatus according to the aforementioned embodiments (e.g., an electronic apparatus A). In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to an embodiment of the disclosure, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g., a compact disc read only memory (CD-ROM)), or through an application store (e.g., Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components according to the aforementioned various embodiments (e.g., a module or a program) may consist of a singular object or a plurality of objects. Also, among the aforementioned corresponding sub components, some sub components may be omitted, or other sub components may be further included in the various embodiments. Alternatively or additionally, some components (e.g., a module or a program) may be integrated as an object, and perform the functions that were performed by each of the components before integration identically or in a similar manner. Operations performed by a module, a program, or other components according to the various embodiments may be executed sequentially, in parallel, repetitively, or heuristically. Or, at least some of the operations may be executed in a different order or omitted, or other operations may be added.

Also, while certain embodiments of the disclosure have been shown and described, the disclosure is not limited to the aforementioned specific embodiments, and it is apparent that various modifications can be made by those having ordinary skill in the art to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
a display including a touch panel;
memory storing one or more instructions;
a communication interface; and
at least one processor that is operatively connected with the display, the memory, and the communication interface, wherein the at least one processor is configured to, by executing the one or more instructions:
while a user interface (UI) screen including a plurality of graphic user interface (GUI) items and a focus GUI located on any one GUI item among the plurality of GUI items is being provided through the display, control a display state of the UI screen according to a control signal received from a remote control apparatus through the communication interface, and
based on identifying a touch input for one area of the display, provide a touch mode by realigning the locations of the plurality of GUI items while a location of a GUI item related to the one area wherein the touch input was identified is fixed.

2. The electronic apparatus of claim 1,
wherein the at least one processor is configured to, by executing the one or more instructions:
control the display state of the UI screen such that the focus GUI disappears from the screen in the touch mode, and
provide the touch mode by realigning the locations of the plurality of GUI items based on the location of the focus GUI before the touch input was identified and the location of the one area wherein the touch input was identified.

3. The electronic apparatus of claim 2,
wherein the at least one processor is configured to, by executing the one or more instructions:
based on the location of the touch input being a first GUI item on which the focus GUI is located or an upper area of the first GUI item, provide the touch mode by realigning the locations of the plurality of GUI items by moving a second GUI item in a lower area of the first GUI item to the upper area, and
based on the location of the touch input being the lower area of the first GUI item on which the focus GUI is located, provide the touch mode by realigning the locations of the plurality of GUI items by moving a third GUI item in the upper area of the first GUI item to the lower area.

4. The electronic apparatus of claim 1,
wherein the :
while the focus GUI is located on a menu item included in a side bar area and the side bar area has been extended, if a touch input for an area other than the side bar area is identified, control the display state of the UI screen such that the side bar area is reduced and the focus GUI disappears from the screen, and
while the focus GUI is located on the menu item included in the side bar area and the side bar area has been extended, if a touch input for the menu item included in the side bar area is identified, perform an operation corresponding to the menu item wherein the touch input was identified.

5. The electronic apparatus of claim 1,
wherein the at least one processor is configured to, by executing the one or more instructions:
provide a floating menu including a plurality of menu items corresponding to a plurality of functions in the touch mode, and
the plurality of functions comprise: functions that can be provided through the remote control apparatus.

6. The electronic apparatus of claim 5,
wherein the at least one processor is configured to, by executing the one or more instructions:
based on any one of the plurality of menu items included in the floating menu being selected according to a user instruction in the touch mode, provide a sub-floating menu corresponding to the selected menu item, and
based on a touch non-supporting screen being displayed according to a user instruction in the touch mode, provide a four-direction manipulation UI for controlling a focus GUI provided on the touch non-supporting screen.

7. The electronic apparatus of claim 1,
wherein the at least one processor is configured to, by executing the one or more instructions:
based on receiving a control signal from the remote control apparatus in the touch mode, identify whether a side bar area is in an extended state,
based on the side bar area being in an extended state, provide the focus GUI to a menu item corresponding to a category of an area other than the side bar area among menu items included in the side bar area, and
based on the side bar area being in a reduced state, provide the focus GUI to a GUI item included in the area other than the side bar area.

8. The electronic apparatus of claim 1,
wherein the at least one processor is configured to, by executing the one or more instructions:
based on receiving a control signal from the remote control apparatus in the touch mode, identify whether the GUI item on which the focus GUI is located is provided on the screen according to a predetermined standard,
based on the GUI item on which the focus GUI is located being provided on the screen, provide the focus GUI to the GUI item, and
based on the GUI item not being provided on the screen, or only a part of the GUI item being provided on the screen, provide the focus GUI to a GUI item in a predetermined location.

9. The electronic apparatus of claim 1,
wherein the at least one processor is configured to, by executing the one or more instructions:
as a GUI item is selected in the touch mode, if a control signal is received from the remote control apparatus after entering a sub depth screen corresponding to the selected GUI item, realign the plurality of GUIs such that the focus GUI is located on the GUI item according to whether it is a fixed focus GUI or a movable focus GUI, and provide the plurality of GUIs.

10. The electronic apparatus of claim 1,
wherein the at least one processor is configured to, by executing the one or more instructions:
based on a left-right scroll input being identified and a touch input corresponding to the left-right scroll input being released in the touch mode, realign the locations of the plurality of GUI items that moved according to the left-right scroll input on the time point of release, and provide the plurality of GUI items.

11. The electronic apparatus of claim 1,
wherein the at least one processor is configured to, by executing the one or more instructions:
based on receiving a control signal from the remote control apparatus after entering the touch mode, realign the up-down arrangement locations of the plurality of GUI items according to a predetermined standard, and
provide the focus GUI to a predetermined GUI item among the plurality of realigned GUI items.

12. A control method of an electronic apparatus comprising a display wherein a touch input is possible, the method comprising:
while a user interface (UI) screen including a plurality of graphic user interface (GUI) items and a focus GUI located on any one GUI item among the plurality of GUI items is being provided through the display, controlling a display state of the UI screen according to a control signal received from a remote control apparatus, and
based on identifying a touch input for one area of the display, providing a touch mode by realigning the locations of the plurality of GUI items while a location of a GUI item related to the one area wherein the touch input was identified is fixed.

13. The control method of claim 12,
wherein the providing the touch mode comprises:
controlling a display state of the UI screen such that the focus GUI disappears from the screen in the touch mode; and
providing the touch mode by realigning the locations of the plurality of GUI items based on the location of the focus GUI before the touch input was identified and the location of the one area wherein the touch input was identified.

14. The control method of claim 13,
wherein the providing the touch mode comprises:
based on the location of the touch input being a first GUI item on which the focus GUI is located or an upper area of the first GUI item, providing the touch mode by realigning the locations of the plurality of GUI items by moving a second GUI item in a lower area of the first GUI item to the upper area; and
based on the location of the touch input being the lower area of the first GUI item on which the focus GUI is located, providing the touch mode by realigning the locations of the plurality of GUI items by moving a third GUI item in the upper area of the first GUI item to the lower area.

15. A non-transitory computer readable medium storing computer instructions that, when executed by at least one processor of an electronic apparatus comprising a display wherein a touch input is possible, make the electronic apparatus perform operations, wherein the operations comprise:
while a user interface (UI) screen including a plurality of graphic user interface (GUI) items and a focus GUI located on any one GUI item among the plurality of GUI items is being provided through the display, controlling a display state of the UI screen according to a control signal received from a remote control apparatus, and
based on identifying a touch input for one area of the display, providing a touch mode by realigning the locations of the plurality of GUI items while a location of a GUI item related to the one area wherein the touch input was identified is fixed.
